# EUROPEAN PATENT SPECIFICATION

(11) **EP 4 498 753 B1**
(45) Date of publication and mention of the grant of the patent: **09.09.2026**
(21) Application number: 23791843.8
(22) Date of filing: 18.04.2023
(51) Int. Cl.: H04L 67/131, H04N 21/262, H04N 21/478, H04N 21/81, H04W 4/30, H04W 76/12, H04W 76/28, H04L 65/613, H04L 65/75, H04L 65/80

(54) **COMMUNICATION CONTROL METHOD**
KOMMUNIKATIONSSTEUERUNGSVERFAHREN
PROCÉDÉ DE COMMANDE DE COMMUNICATION

(30) Priority: 21.04.2022 JP 2022070308
(43) Date of publication of application: 29.01.2025
(73) Proprietor: Kyocera Corporation, Kyoto-shi, Kyoto 612-8501 (JP)
(72) Inventor: FUJISHIRO, Masato, Kyoto-shi, Kyoto 612-8501 (JP); HATA, Mitsutaka, Kyoto-shi, Kyoto 612-8501 (JP)
(74) Representative: Viering, Jentschura & Partner mbB Patent- und Rechtsanwälte
(86) International application number: PCT/JP2023/015397
(87) International publication number: WO 2023/204195

(56) References cited:
- WO-A1-2022/006410
- WO-A1-2023/012914
- US-A1- 2021 105 762
- VIVO: "Potential enhancement areas for XR", vol. RAN WG1, no. e-Meeting; 20211011 - 20211019, 1 October 2021 (2021-10-01), XP052057971, Retrieved from the Internet <URL:https://ftp.3gpp.org/tsg_ran/WG1_RL1/TSGR1_106b-e/Docs/R1-2109010.zip R1-2109010 Potential enhancement areas for XR.docx> [retrieved on 20211001]
- VIVO: "Potential enhancement areas for XR", 3GPP TSG RAN WG1 #106B-E, R1-2109010, 1 October 2021 (2021-10-01), XP052057971

## Description

### TECHNICAL FIELD

The present disclosure relates to a communication control method in mobile communication systems.

### BACKGROUND OF INVENTION

In specifications of the Third Generation Partnership Project (3GPP) (registered trademark. The same applies below) that is a standardization project for mobile communication systems, eXtended Reality (XR) has been approved for Release 18. XR is a broad term that includes Virtual Reality (VR), Augmented Reality (AR), and Mixed Reality (MR), and represents an environment obtained by merging the real world and a virtual space. XR represents a mixed environment of a real space and a virtual space generated by computer technology and wearable devices, and expresses an interaction between a human and a machine.

WO 2022/006410 A1 discloses a method implemented by a wireless transmit/receive unit, WTRU, the method comprising: receiving Radio Resource Management, RRM, configuration information from a serving network node, the RRM configuration information comprising information indicating Radio Frequency-based RRM events related to expected Radio-Frequency communication loss between the WTRU and the serving network node, and visual information about visual objects detectable by the WTRU, the visual objects associated with Transmitter-Receiver Points, TRPs; under condition of occurrence of a RF-based RRM event as comprised in the RRM configuration information received, performing, by the WTRU, a visual object search; and under condition of detecting, in the visual object search, a visual object matching one of the visual objects detectable by the WTRU as comprised in the RRM configuration information received, performing RF measurements, selecting a TRP Transmit, Tx, beam from the TRP associated with the matching visual object based on at least the RF measurements, and transmitting a report to the serving network node, the report comprising information related to the RF measurements performed and visual information obtained by the WTRU, related to the visual object search.

VIVO, "Potential enhancement areas for XR", 3GPP TSG RAN WG1 #106bis-e, R1-2109010, e-Meeting, October 11th - 19th 2021, XP052057971, provides a view on potential enhancement areas for Rel-18 XR.

### CITATION LIST

### NON-PATENT LITERATURE

Non-Patent Document 1: RP-213587, 3GPP TSG RAN Meeting #94e, "Study on XR Enhancements for NR", Nokia, Dec. 6-17, 2021.
Non-Patent Document 2: 3GPP TR 38.838 V17.0.0 (2021-12)

### SUMMARY

The present invention provides a communication control method according to claim 1, a user equipment according to claim 9, a network node according to claim 10, a mobile communication system according to claim 11, a computer program according to claim 12, and a chipset according to claim 13.

### BRIEF DESCRIPTION OF THE DRAWINGS

FIG. 1 is a diagram illustrating a configuration example of a mobile communication system according to a first embodiment.
FIG. 2 is a diagram illustrating a configuration example of a user equipment (UE) according to the first embodiment.
FIG. 3 is a diagram illustrating a configuration example of a gNB (base station) according to the first embodiment.
FIG. 4 is a diagram illustrating a configuration example of a protocol stack for a user plane according to the first embodiment.
FIG. 5 is a diagram illustrating a configuration example of a protocol stack for a control plane according to the first embodiment.
FIG. 6 is a diagram illustrating an operation example according to the first embodiment.
FIG. 7 is a diagram illustrating an operation example according to variation 1 of the first embodiment.
FIG. 8 is a diagram illustrating an operation example according to variation 2 of the first embodiment.
FIG. 9 is a diagram illustrating an operation example according to variation 3 of the first embodiment.
FIG. 10 is a diagram illustrating an operation example according to a second embodiment.
FIG. 11 is a diagram illustrating an operation example according to a third embodiment.

### DESCRIPTION OF EMBODIMENTS

An aspect of the present disclosure provides a communication control method that can appropriately perform communication that uses XR.

A mobile communication system according to an embodiment is described with reference to the drawings. In the description of the drawings, the same or similar parts are denoted by the same or similar reference signs.

### First Embodiment

### Configuration of Mobile Communication System

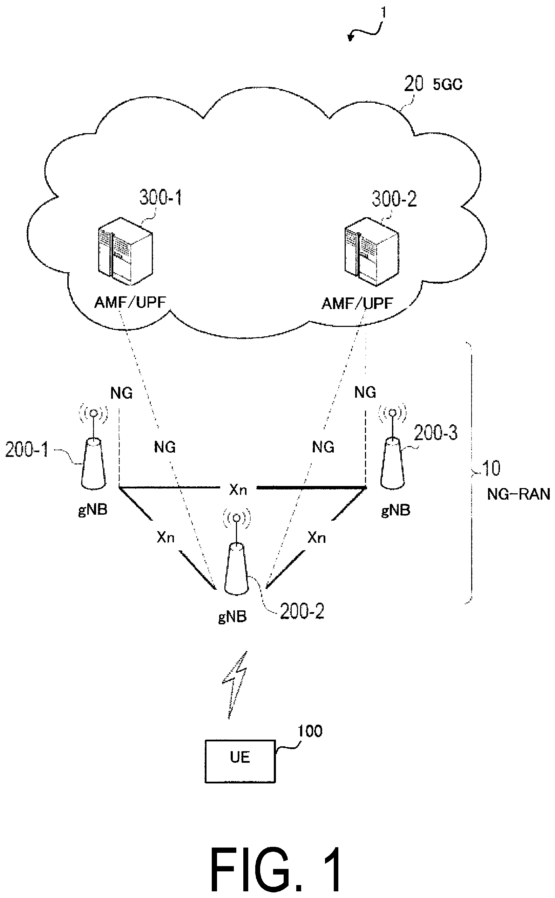

FIG. 1 is a diagram illustrating a configuration of a mobile communication system according to a first embodiment. The mobile communication system 1 complies with the 5th Generation System (5GS) of the 3GPP standard. The description below takes the 5GS as an example, but Long Term Evolution (LTE) system may be at least partially applied to the mobile communication system. Alternatively, a sixth generation (6G) system may be at least partially applied to the mobile communication system.

The mobile communication system 1 includes a User Equipment (UE) 100, a 5G radio access network (Next Generation Radio Access Network (NG-RAN)) 10, and a 5G Core Network (5GC) 20. The NG-RAN 10 may be hereinafter simply referred to as a RAN 10. The 5GC 20 may be simply referred to as a core network (CN) 20.

The UE 100 is a mobile wireless communication apparatus. The UE 100 may be any apparatus as long as the UE 100 is used by a user. Examples of the UE 100 include a mobile phone terminal (including a smartphone) or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The UE 100 includes an XR device. The XR device is, for example, a device that can process XR. More specifically, the XR device includes a Head Mount Display (HMD) that can be mounted on a head of a person, an eyeglass-type AR glass (or smart glass), a mobile handset that can be held by a hand, a wristwatch-type device (smartwatch), and a smartphone. These XR devices may be referred to as wearable devices. The HMD includes a display, a lens, a tracking sensor, a camera, a control unit (such as a Central Processing Unit (CPU) or a Graphics Processing Unit (GPU)) that performs processing related to the XR, and a communication function. The AR glass has a function of allowing a video to transmit therethrough. The mobile handset may include various sensors such as tracking sensors. The HMDs, the AR glasses, the wristwatch-type devices, and the mobile handsets have communication functions that support the 5G systems and the like. Hereinafter, the UE 100 will be described assuming that the UE 100 includes such an XR device.

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter simply referred to as one "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

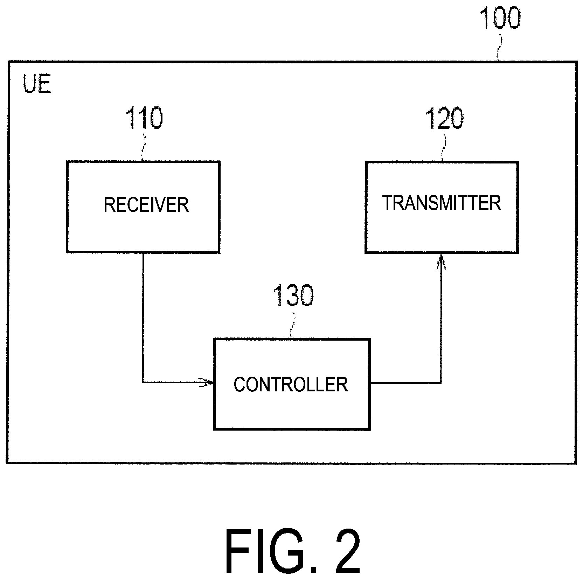

FIG. 2 is a diagram illustrating a configuration of the user equipment (UE) 100 according to the first embodiment. The UE 100 includes a receiver 110, a transmitter 120, and a controller 130. The receiver 110 and the transmitter 120 constitute a wireless communicator that performs wireless communication with the gNB 200.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control and processing in the UE 100. Such processing includes processing of respective layers to be described later. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing. Note that the controller 130 may perform each processing and each operation in the UE 100 in each embodiment to be described below.

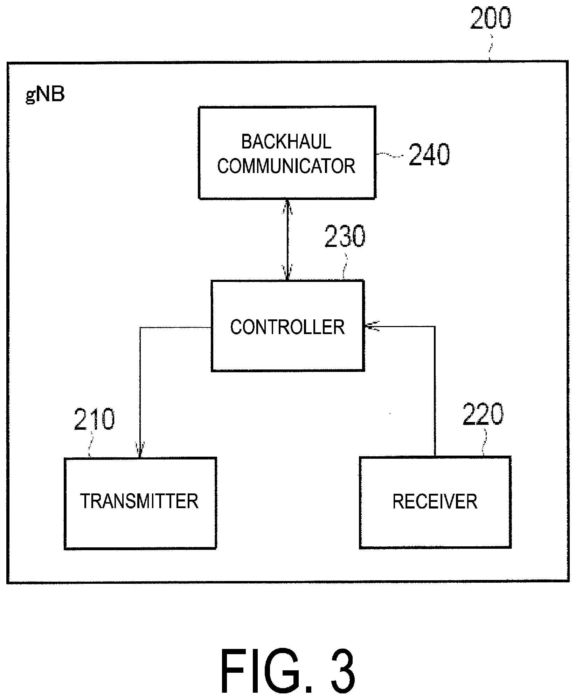

FIG. 3 is a diagram illustrating a configuration of the gNB 200 (base station) according to the first embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processing in the gNB 200. Such processing includes processing of respective layers to be described later. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing. Note that the controller 230 may perform all of the processing and operations in the gNB 200 in each embodiment to be described below.

The backhaul communicator 240 is connected to a neighboring base station via an Xn interface which is an inter-base station interface. The backhaul communicator 240 is connected to the AMF/UPF 300 via a NG interface between a base station and the core network. Note that the gNB 200 may include a Central Unit (CU) and a Distributed Unit (DU) (i.e., functions are divided), and the two units may be connected via an F1 interface, which is a fronthaul interface.

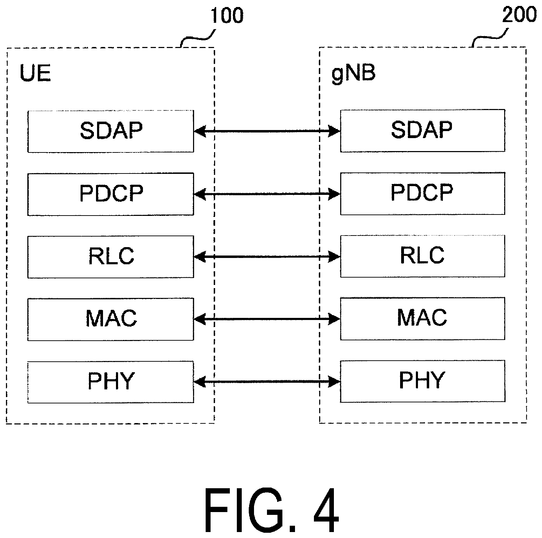

FIG. 4 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 blind decodes the PDCCH using a radio network temporary identifier (RNTI) and acquires successfully decoded DCI as DCI addressed to the UE 100. The DCI transmitted from the gNB 200 is appended with CRC parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

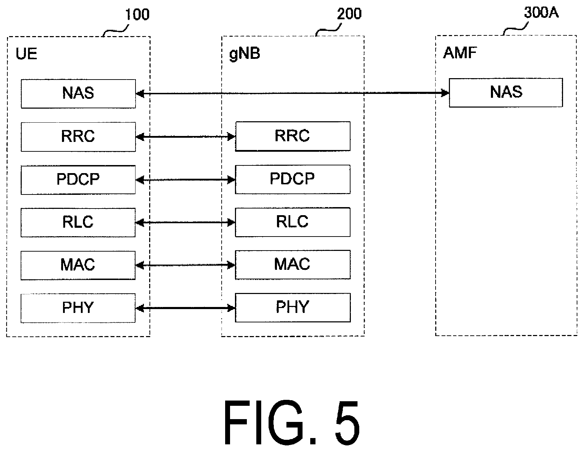

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 is present, the UE 100 is in an RRC connected state. When no connection (RRC connection) between the RRC of the UE 100 and the RRC of the gNB 200 is present, the UE 100 is in an RRC idle state. When the connection between the RRC of the UE 100 and the RRC of the gNB 200 is suspended, the UE 100 is in an RRC inactive state.

The NAS which is positioned upper than the RRC layer performs session management, mobility management, and the like. NAS signaling is transmitted between the NAS of the UE 100 and the NAS of the AMF 300. Note that the UE 100 includes an application layer other than the protocol of the radio interface. A layer lower than the NAS is referred to as Access Stratum (AS).

### XR

As described above, XR is a broad term that includes, for example, Virtual Reality (VR), Augmented Reality (AR), and Mixed Reality (MR) and represents an environment obtained by merging the real world and a virtual space. XR is also, for example, a generic term for such various types of realities. XR is also, for example, a generic term for a technology that enables perception of something that does not exist in reality by, for example, merging the real world and the virtual space.

According to XR, the UE 100 that is a portable or wearable end-user device assists human-to-machine or human-to-human communication to execute. Such communication enables application of XR to various application fields such as entertainment, healthcare, or education.

In addition to XR, Cloud Gaming (CG) is one of use cases in future mobile systems. Cloud gaming is, for example, a generic term for use cases where most of computation related to a game is offloaded to an edge server or a remote server. According to cloud gaming, the UE 100 transmits information related to pose and/or control. A cloud side performs computation and the like related to video data or the like based on these pieces of information, and provides videos and the like related to the game to the UE 100.

Note that Virtual Reality (VR) refers to creating an environment that is not an original (or the real world), yet whose functional essence is the same as the original by stimulating a user's senses. According to Virtual Reality (VR), a user generally wears an HMD, the user's field of view is replaced with simulated visual elements, and accompanying audios are provided to the user through a headphone. The virtual space is designed to mimic sensory stimulation of a visual sense, an auditory sense, or the like of the real world as naturally as possible. Metaverse that is a virtual space (or service) constructed in a computer or a computer network and is different from the real world may be also included in Virtual Reality (VR).

Augmented Reality (AR) is, for example, a technique of superimposing a virtual space on the real world to display. Augmented Reality (AR) also provides additional information (artificially generated items or content) by superimposing the additional information on an environment of user's reality. The additional information may be also directly perceived without a sensor or the like, or indirectly perceived via a sensor or the like.

Mixed Reality (MR) is a technique that mixes and/or merges, for example, the real world and a virtual space to construct spaces that influence each other in real time. Mixed Reality (MR) is a development form of Augmented Reality (AR) and is constructed with the intention of inserting virtual elements into a physical scene and giving an illusion that the virtual elements are part of an actual scene.

Representative forms of XR are Virtual Reality (VR), Augmented Reality (AR), and Mixed Reality (MR), and XR includes fields for interpolating between these VR, AR, and MR, too.

In many uses cases of XR and Cloud Gaming (CG), a DL direction is characterized by video stream traffic and a UL direction is characterized by traffic that is a combination of pose and/or control and a video stream. The video stream also has a feature that the video stream has a relatively high data rate, and data related to pose and/or control is frequently updated. XR and Cloud Gaming (CG) also have a feature that traffic in the DL direction and traffic in the UL direction are traffic that are strict against delay as compared to other use cases.

### XR Traffic Models

Hereinafter, XR traffic models will be described. The XR traffic models include (1) general traffic models and (2) specific traffic models. First, (1) the general traffic models will be described. (1) The general traffic models include (1.1) traffic models in the DL direction and (1.2) traffic models in the UL direction.

### (1) General Traffic Models

### (1.1) Traffic Models in DL direction

The traffic models in the DL direction include a single-stream DL traffic model and a multi-stream DL traffic model. The two traffic models can be summarized as follows.

### (1.1.1) Single Stream DL Traffic Model: Series of Video Frames

### (1.1.2) Multi-Stream DL Traffic Model:

(1.1.2.1) Option #1: Two Streams of First Stream That Is Intra-Coded (I) Stream and Second Stream That Is Predicted (P) Stream. Option #1 includes a slice-based traffic model (option #1A) and a Group-Of-Picture (GOP)-based traffic model (option #1B).

(1.1.2.1A) Option #1A (slice-based): First Stream Is I Slice (I stream), and Second Stream Is P Slice (P stream). The I slice is, for example, a slice obtained by encoding all macroblocks included in the I slice by intra-frame prediction. The P slice is, for example, a slice obtained by encoding all macroblocks included in the P slice by intra-frame prediction or inter-frame prediction. When a video frame is sliced into N frames, one frame may be the I slice and the remaining (N-1) frames may be the P slices.

(1.1.2.1B) Option #1B (GOP-Based): First Stream Is I Frame (I Stream), and Second Stream Is P Slice (P Stream). The I frame is a frame encoded from the corresponding video frame without using another video frame. The P frame is a frame encoded using a video frame in a temporally forward direction. When a GOP size is K frames, the I frame is transmitted every K frames. The GOP includes the one I frame and the (K-1) P frames.

(1.1.2.2) Option #2: Traffic Model Includes Two Streams of First Stream That Is Video and Second Stream That Is Audio and/or Data.

(1.1.2.3) Option #3: Traffic Model Includes First Stream That Is Field of View (FOV) and Second Stream That Is Omnidirectional View. For example, the FOV is video data of a user's line of sight, and the omnidirectional view is video data of omnidirections that includes the video data of the user's line of sight and whose center is the user.

### (1.2) Traffic Models in UL Direction

The traffic models in the UL direction include pose and/or control stream traffic models. The traffic models are traffic models in which the UE 100 transmits data related to pose and/or control.

### (2) Specific Traffic Models

Specific traffic models include (2.1) a Virtual Reality (VR) traffic model, (2.2) an Augmented Reality (AR) traffic model, and (2.3) a Computer Gaming (CG) traffic model.

### (2.1) Virtual Reality (VR) Traffic Model

The Virtual Reality (VR) traffic model can be summarized as follows.

### (2.1.1) DL Stream:

Single Stream Model: Identical to Above (1.1.1) "Single Stream DL Traffic Model" (Series of Video Frames)
Multi-Stream Model: Identical to Above (1.1.2.2) "Option #2" (First Stream Is Video and Second Stream Is Audio and/or Data)

### (2.1.2) UL Stream: Identical to Above (1.2) "Traffic Model in UL Direction".

### (2.2) Augmented Reality (AR) Traffic Model

The Augmented Reality (AR) traffic model can be summarized as follows.

### (2.2.1) DL Stream: Identical to Above (2.1.1)

### (2.2.2) UL Stream:

Model #1: 1 Stream Model
Model #2: 2 Stream Model: First Stream Is Pose and/or Control, and Second Stream Is Collection of Scene (e.g., Continuous Video), Video, Data, and Audio
Model #3A: 3 Stream Model A: First Stream Is Pose and/or Control, Second Stream Is One Stream of Collection of Stream of Scene and Stream of Video, and Third Stream Is One Stream of Collection of Audio and Data.
Model #3B: 3 Stream Model B: First Stream Is Pose and/or Control, Second Stream Is I Stream of Video, and Third Stream Is P Streams of Video

### (2.3) Computer Gaming (CG) Traffic Model

The Computer Gaming (CG) traffic model can be summarized as follows.

### (2.3.1) DL Stream

Single Stream Model: Identical to Above (1.1.1) "Single Stream DL Traffic Model" (Series of Video Frames)
Multi-Stream Model: Identical to Above (1.1.2) "Multi Stream DL Traffic Model"

### (2.3.2) UL Stream: Identical to Above (1.2) "Traffic Model in UL Direction".

### Communication Control Method According to First Embodiment

An object of the first embodiment is that the mobile communication system 1 appropriately performs communication that uses XR taking features relating to such XR traffic into account.

The user equipment (e.g., UE 100) transmits XR assistance information relating to XR to the base station (e.g., gNB 200). XR includes Virtual Reality (VR), Augmented Reality (AR), and Mixed Reality (MR), and represents an environment obtained by merging the real world and a virtual space.

The XR assistance information is transmitted to the gNB 200, so that the gNB 200 can perform appropriate configuration relating to communication that uses XR for the UE 100 based on the XR assistance information. Consequently, the mobile communication system 1 can appropriately perform communication that uses XR through such a configuration.

The XR assistance information includes traffic information relating to the traffic characteristics of the XR traffic. The first embodiment will describe an example where the XR assistance information includes traffic information.

### Operation Example According to First Embodiment

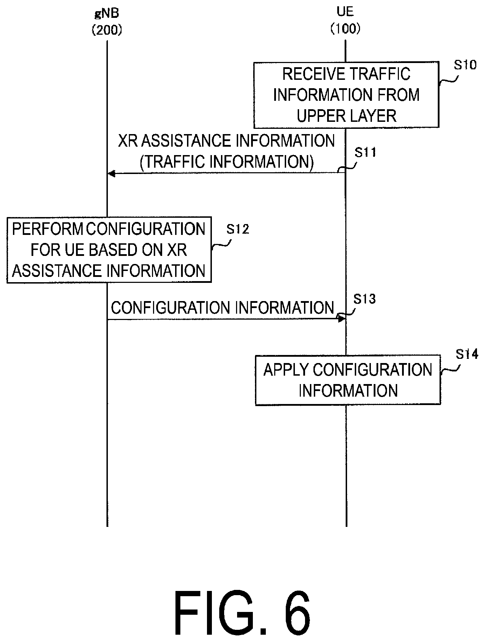

FIG. 6 is a diagram illustrating an operation example according to the first embodiment.

As illustrated in FIG. 6, in step S10, an AS of the UE 100 receives the traffic information from an upper layer (e.g., an application layer or a NAS layer).

In step S11, the UE 100 transmits the XR assistance information including the traffic information to the gNB 200. The XR assistance information is assistance information relating to XR. The XR assistance information may be information indicating that, by transmitting the information to the gNB 200, the UE 100 expects that the gNB 200 performs optimal configuration for communication relating to XR. Note that, prior to step S11, the gNB 200 may request the UE 100 to notify the gNB 200 of the XR assistance information. The request may be included in, for example, an RRC message, a MAC CE, or the like and transmitted.

The UE 100 may include the XR assistance information in the RRC message to transmit to the gNB 200. In this case, the UE 100 may transmit the XR assistance information as UE assistance information. Alternatively, the UE 100 may transmit the XR assistance information as a new message (e.g., XR Assistance Information). The UE 100 may include the XR assistance information in the MAC CE instead of the RRC message to transmit, or may include the XR assistance information in a PDCP Control Protocol Data Unit (PDU) to transmit. If there is a Control PDU dedicated to an XR layer, the UE 100 may include the XR assistance information in the PDU to transmit.

The traffic information included in the XR assistance information is, for example, as follows.

Firstly, the traffic information may be a Logical Channel Identifier (LCID: Logical Channel ID) used to transmit the XR traffic. The traffic information may be a bearer ID of a bearer used to transmit the XR traffic. Alternatively, the traffic information may be an RLC channel ID of an RLC channel used to transmit the XR traffic. The traffic information may be represented by a Radio Network Temporary Identifier (RNTI). For example, a Configured Scheduling Radio Network Temporary Identifier (CS-RNTI) used when the XR traffic is transmitted using Configured Scheduling (CS) may be the traffic information. Note that Configured Scheduling (CS) is a scheduling scheme that, when radio resources are allocated in a UL direction, subsequently enables transmission in the UL direction periodically using radio resources. When, for example, there is an RNTI dedicated to XR, the RNTI may be the traffic information. When there is an XR session ID, the traffic information may be the XR session ID. That is, the traffic information may be identification information relating to a transmission path through which the XR traffic is transmitted.

Secondly, the traffic information may be throughput of the XR traffic. The traffic information may be the number of transmission bits per burst. In this case, the number of transmission bits may be a transport block size. The traffic information may be throughput per burst. The traffic information may be average throughput.

Thirdly, the traffic information may be a delay tolerance (PDB: Packet Delay Budget). Note that the PDB is, for example, a Quality of Service (QoS) parameter indicating an upper limit of packet delay between the UE 100 and the UPF.

Fourthly, the traffic information may be a traffic pattern. The traffic pattern may be more specifically a transmission period and/or a reception period. The transmission period and/or the reception period may indicate a duration of one burst or a burst interval. The traffic pattern may be represented by a video frame generation rate (fps (frame per second) or Hz).

Fifthly, the traffic information may be an identifier indicating a transmission direction (the UL direction or a DL direction) of the XR traffic. Cases are also considered where the traffic pattern of the XR traffic is different between the UL direction and the DL direction. The UE 100 may transmit traffic information in the UL direction and traffic information in the DL direction. For example, throughput in the UL direction is XX and the delay tolerance is YY, and throughput in the DL direction is ZZ and the delay tolerance is UU.

Sixthly, the traffic information may be represented by a QoS value. The QoS value may indicate base characteristics of the XR traffic. The base characteristics may be represented by a 5QI. When, for example, the QoS value of the traffic information is indicated as "5" of the 5QI, the QoS indicated as "5" of the 5QI may be the base characteristics of the XR traffic. The QoS value can be also combined with the above-described delay tolerance. When, for example, the QoS value is indicated as "5" of the 5QI and the delay tolerance is indicated as 2 ms, the XR traffic can be indicated as the XR traffic whose base characteristics is "5" of the 5QI and whose delay tolerance is 2 ms.

Seventhly, the traffic information may be a time difference between an allocated Configured Grant (CG) configuration and an actual packet arrival time. More specifically, a difference between a transmission start timing in the CG configured through the CG configuration (or a start timing of a DRX active time indicating a time during which the UE 100 monitors a PDCCH) and a timing at which the AS of the UE 100 actually receives the packet from the upper layer may be the traffic information. The difference between the transmission start timing in the CG and the timing (e.g., PDCP processing completion timing) at which the packet from the upper layer is in a transmission standby state may be the traffic information. The UE 100 can perform transmission with lower delay as such a difference is smaller.

Eighthly, when multi-stream transmission is performed for the XR traffic, the XR assistance information may include traffic information of each stream. The traffic model of the above-described XR traffic includes transmission of two streams (above-described (1.1.2.1)) that are an I stream and a P stream as multi-stream. The XR assistance information may include traffic information of the I stream, traffic information of the P stream, and the like. In this case, the XR assistance information may indicate the traffic information of each stream in a list form. The number of streams may be implicitly indicated by the number of entries in the list. The XR assistance information may include information indicating association between streams. When, for example, two streams are used as the XR session, information indicating that the two streams are associated with one XR session may be used. When each stream of the multi-stream traffic is associated with each QoS flow ID, each bearer ID, or each LCID, the XR assistance information may include information indicating the association between each QoS flow ID, each bearer ID, or each LCID.

In step S12, the gNB 200 performs configuration for the UE 100 based on the XR assistance information. For example, the gNB 200 configures a Connected mode-Discontinuous Reception (C-DRX) configuration (or SPS (Semi-Persistent Scheduling) configuration) in the DL direction, a CG configuration in the UL direction, and the like. Note that C-DRX is a technique that the UE 100 performs an intermittent operation while maintaining an RRC connected state. SPS is a scheduling scheme that, when radio resources in the DL direction are allocated, subsequently enables transmission in the DL direction using the radio resources. Here, the gNB 200 may perform scheduling based on the XR assistance information. This scheduling may be dynamic scheduling (e.g., allocation of radio resources for each PDSCH) in addition to SPS or CG.

In step S13, the gNB 200 transmits the configuration information to the UE 100. The gNB 200 may include the configuration information in an RRC message such as an RRC setup (RRCSetup) message to transmit. Alternatively, the gNB 200 may include the configuration information in a dedicated RRC message to transmit. The gNB 200 may include the configuration information in a MAC CE, DCI, or the like to transmit. Note that, when the gNB 200 cannot perform configuration for the UE 100 in step S12, the gNB 200 may transmit an error notification to the UE 100 in step S13. The gNB 200 may transmit the RRC message, the MAC CE, or the DCI including the error notification similar to the configuration information. The error notification may include information of a time during which the configuration information can be used (or the configuration information can be transmitted). The information of the time may be represented by an elapsed time (e.g., three hours later) from a current time. Alternatively, the information of the time may be represented by time information (e.g., 24:00).

In step S14, the UE 100 applies the configuration information. The AS of the UE 100 may output transmission timing and/or reception timing information of communication relating to XR to an upper layer (e.g., application layer) based on the configuration information. The upper layer may appropriately adjust a resolution, a bit rate, or the like of the XR application according to the configuration information.

### Variation 1 of First Embodiment

As described in the first embodiment, XR traffic models include various types. For example, UL streams of Augmented Reality (AR) include a first stream that is pose and/or control, a second stream that is one stream of a collection of a stream of a scene and a stream of a video, and a third stream that is one stream (model #3A) of a collection of audio and data. As described in Non-Patent Document 2, each type has different required performance.

Variation 1 of the first embodiment will describe an example where information included in the XR assistance information includes information relating to the XR traffic type. More specifically, the information relating to the XR traffic type includes the number of streams and transmission information for each stream.

Thus, for example, the gNB 200 can recognize what type of a stream the UE 100 transmits to the gNB 200 or what type of a stream the UE 100 can receive from the gNB 200, and can perform configuration for the UE 100 in accordance with such a type. Accordingly, the mobile communication system 1 can appropriately perform communication that uses XR.

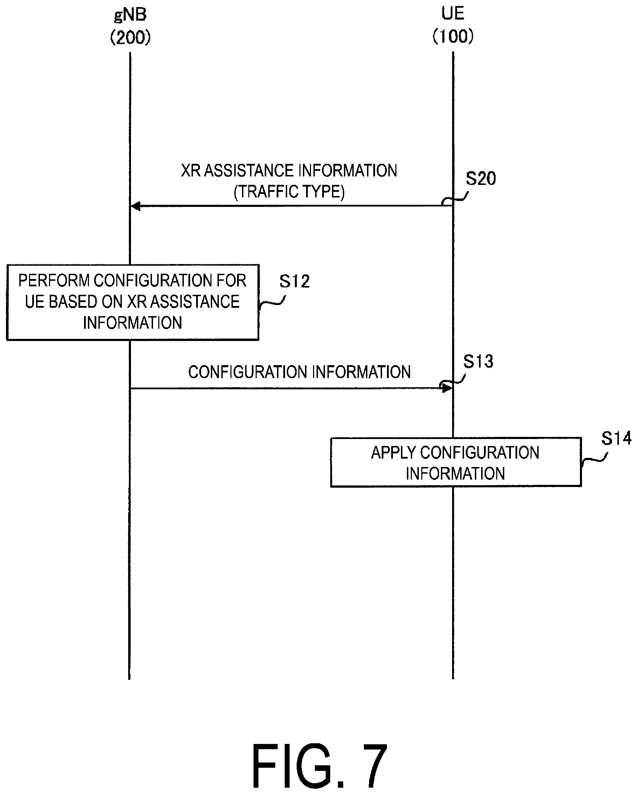

FIG. 7 is a diagram illustrating an operation example according to variation 1 of the first embodiment.

As illustrated in FIG. 7, in step S20, the UE 100 transmits the XR assistance information including information relating to the traffic type. Note that, similar to the first embodiment, prior to step S20, the gNB 200 may request the UE 100 to notify the gNB 200 of the XR assistance information.

The information relating to the traffic type is, for example, as follows.

Firstly, the information may be identification information of a transmission path used to transmit the XR traffic. The identification information of the transmission path may be an LCID or the like similar to the first embodiment.

Secondly, the information may be information indicating the number of streams.

Thirdly, the information may be transmission information for each stream. The transmission information may be information indicating at least one selected from the group consisting of a pose, control, a scene, a video, audio, data, an Intra-coded (I) video stream, and a Predicted (P) video stream. The transmission information may be QoS information for each stream. The transmission information may be identification information for identifying each XR traffic model described in the first embodiment from other XR traffic models. For example, the identification information of a single stream model in the DL stream of above (2.2.1) Virtual Reality (VR) is "XXX", and the identification information of the model #3A in the UL stream of above (2.2.2) Augmented Reality (AR) is " YYY " or the like. Identification information of such a traffic model or a type may be determined by a specification.

Fourthly, the XR assistance information may include information indicating that resources for the XR traffic are desired.

Step S12 and subsequent steps are the same as those in the first embodiment.

### Variation 2 of First Embodiment

The first embodiment has described the example where the XR assistance information includes the traffic information, and variation 1 has described the example where the XR assistance information includes the information relating to the XR traffic type. However, the present disclosure is not limited thereto. For example, the XR assistance information may include upper layer information relating to the upper layer.

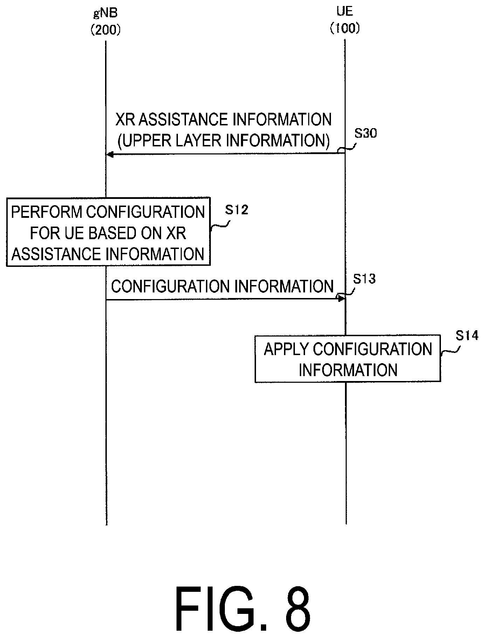

FIG. 8 is a flowchart illustrating an operation example according to variation 2 of the first embodiment.

As illustrated in FIG. 8, in step S30, the UE 100 transmits the XR assistance information including the upper layer information to the gNB 200. The AS of the UE 100 may include the upper layer information received from the upper layer (e.g., application layer) in the XR assistance information to transmit to the gNB 200. Note that, similar to the first embodiment, prior to step S30, the gNB 200 may request the UE 100 to notify the gNB 200 of the XR assistance information.

The upper layer information is, for example, as follows.

Firstly, the upper layer information may be information indicating one of Virtual Reality (VR), Augmented Reality (AR), or Cloud Gaming (CG), The upper layer information may be information indicating one of Virtual Reality (VR), Augmented Reality (AR), Cloud Gaming (CG), or Mixed Reality (MR).

Secondly, the upper layer information may be a type of an apparatus (i.e., UE 100) that executes XR and/or a product name (or model) of the corresponding apparatus. In particular, according to Augmented Reality (AR), the performance or contents of communication is considered to vary depending on the apparatus. The gNB 200 that has received the upper layer information can recognize the traffic characteristics from the model information of the apparatus or the like, and can also perform configuration matching the traffic characteristics for the UE 100. The gNB 200 can also recognize QoS information requested for each apparatus from the model information of the apparatus or the like, and perform configuration matching QoS characteristics for the UE 100.

Thirdly, the upper layer information may be a traffic model type (or an encoding type). For example, the traffic model type may be identification information indicating a GOP-based I frame and P frame. Alternatively, the traffic model type may be identification information indicating a slice-based I slice and P slice. Alternatively, the traffic model type may be identification information for identifying each of the XR traffic models described in the first embodiment.

Step S12 and subsequent steps are the same as those in the first embodiment.

### Variation 3 of First Embodiment

The first embodiment has described that the UE 100 transmits the XR assistance information to the gNB 200. However, the present disclosure is not limited thereto. For example, the CN 20 may transmit the XR assistance information to the gNB 200.

More specifically, the access mobility management apparatus (e.g., AMF 300) transmits the XR assistance information relating to XR to a base station (e.g., gNB 200). The XR assistance information may be transmitted from a session management apparatus (e.g., a Session Management Function (SMF)) to the AMF 300 or the gNB 200. XR includes virtual reality, augmented reality, and mixed reality, and represents an environment obtained by merging the real world and a virtual space.

Also in variation 3, the gNB 200 can perform configuration relating to communication of XR for the UE 100 based on the XR assistance information. Accordingly, similar to the first embodiment, the mobile communication system 1 can appropriately perform communication relating to XR. In this regard, since the XR assistance information is transmitted from the CN 20 to the gNB 200, the UE 100 may not transmit the XR assistance information. Hence, radio resources used for transmission of the XR assistance information can be used for other wireless communication.

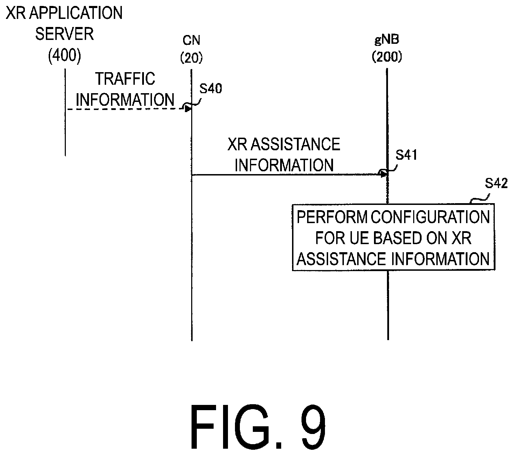

FIG. 9 is a diagram illustrating an operation example according to variation 3 of the first embodiment.

As illustrated in FIG. 9, in step S40, the CN 20 may receive traffic information from an XR application server 400. The XR application server 400 performs communication relating to XR with the UE 100 via the CN 20 and the gNB 200 of the mobile communication system 1. Accordingly, the XR application server 400 can maintain the traffic information relating to the XR traffic. The traffic information according to variation 3 may include the same information as the traffic information described in the first embodiment.

In step S41, the CN 20 (e.g., AMF 300) transmits the XR assistance information to the gNB 200. The XR assistance information includes the traffic information. The traffic information may be traffic information received from the XR application server 400. Similar to the traffic information according to the first embodiment, the traffic information includes identification information relating to a transmission path through which the XR traffic is transmitted. The identification information may be represented by one of a QoS flow ID, a PDU session ID, an MBS session ID, or an XR session ID. Note that the XR assistance information may include information relating to the traffic type described in variation 1. Alternatively, the XR assistance information may include the upper layer information relating to the upper layer described in variation 2. Note that, prior to step S41, the gNB 200 may request the CN 20 to transmit the XR assistance information to the gNB 200. For example, the request may be included in an NG message and transmitted.

In step S42, the gNB 200 performs configuration relating to communication of XR for the UE 100 based on the XR assistance information. Similar to the first embodiment, the configuration may be also the C-DRX (or SPS) configuration in DL, and the CG configuration in UL.

Variation 3 has described an example where the XR assistance information is transmitted from the CN 20 to the gNB 200. The XR assistance information may be transferred from a handover source gNB 200-1 (or a source cell) to a handover destination gNB 200-2 (or a target cell) at a time of handover. More specifically, the XR assistance information is transmitted from the handover source gNB 200-1 (or source cell) or the AMF 300 to the handover destination gNB 200-2 (or target cell) together with a message for requesting handover.

### Second Embodiment

Variation 3 of the first embodiment has described the example where the CN 20 transmits the XR assistance information to the gNB 200. In this case, the gNB 200 can configure a bearer (DRB: Data Radio Bearer) for the UE 100 based on the XR assistance information.

The second embodiment will describe an example where, when the gNB 200 performs, for example, bearer configuration, the gNB 200 transmits configuration information including information relating to the configuration to the UE 100.

More specifically, firstly, a base station (e.g., gNB 200) configures a transmission path through which the XR traffic is transmitted. Secondly, the base station transmits configuration information relating to the configured transmission path to the user equipment (e.g., UE 100). Thirdly, the user equipment transmits the XR assistance information including identification information relating to the transmission path to the base station based on the configuration information. Here, the configuration information includes association information between identification information and an XR session ID.

Thus, for example, as described in the first embodiment, the UE 100 can also transmit the XR assistance information including a bearer ID (e.g., the identification information relating to the transmission path) to the gNB 200. Accordingly, the mobile communication system 1 can appropriately perform communication relating to XR.

An operation performed in the second embodiment may be performed before the operation performed in the first embodiment is performed. However, the second embodiment is not necessarily based on the premise of the operation of the first embodiment, and may be carried out independently.

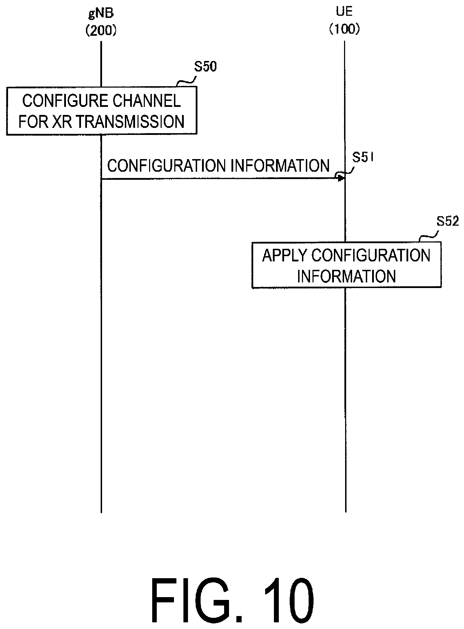

FIG. 10 is a diagram illustrating an operation example according to the second embodiment.

As illustrated in FIG. 10, in step S50, the gNB 200 configures for the UE a transmission path for XR transmission. The transmission path configuration includes, for example, the followings.

Firstly, the transmission path configuration may include association information between the bearer ID and the XR session ID. When, for example, the gNB 200 associates a bearer configured between the gNB 200 and the UE 100 for an XR session configured between the UPF 300 and the UE 100, the association information between the XR session ID of the XR session and the bearer ID of the bearer may be included in the transmission path configuration. Instead of the bearer ID, an LCID, an RLC channel ID, or an RNTI may be used. Instead of the bearer ID, a QoS flow ID may be used. The XR session ID may be a stream ID of each stream in the XR traffic. Alternatively, the XR session ID may be a traffic type (the I stream, the P stream, or a type such as a pose and/or control) assigned to each stream. Alternatively, the XR session ID may be an identifier that only indicates that the XR session ID is used for the XR session. Alternatively, the transmission path configuration may include set information of a plurality of bearers (or association information of a plurality of bearers). For example, the set information is association information for associating two bearers to use for one XR transmission, or the like. For example, the set information is association information for associating a bearer for the I stream and a bearer for the P stream, or the like.

Secondly, the transmission path configuration may include association information between a Temporary Mobile Group Identity (TMGI) and the XR session ID. In this regard, when the UE 100 uses Multicast and Broadcast Services (MBS), the gNB 200 may configure the association information. Hence, for example, after the UE 100 transmits interest information of the MSB to the gNB 200, the gNB 200 may configure the association information. When a capacity is increased using the MBS in the DL direction, the association between the TMGI and the XR session ID may be effective. Note that, instead of the TMGI, an MRB ID (MBS Radio Bearer ID), an LCID, or an RLC channel ID may be used. Instead of the TMGI, an RNTI such as a Group-RNTI (G-RNTI) or a Group Configured Scheduling RNTI (G-CS-RNTI) may be used.

Thirdly, the transmission path configuration may include association information between the DRX information and the XR session ID. In this case, too, when the gNB 200 performs DRX configuration in the DL direction for XR transmission, the transmission path configuration may include the association information. The transmission path configuration may include association information between the SPS configuration and the XR session ID. In this case, too, when the gNB 200 performs SPS configuration in the DL direction for XR transmission, the transmission path configuration may include the association information.

Fourthly, the transmission path configuration may include association information between a Configured Grant (CG) configuration and the XR session ID. In a CG configuration period, only data transmission of the XR session may be permitted. In this case, too, when the gNB 200 performs CG configuration in the UL direction for XR transmission, the transmission path configuration may include the association information.

Fifthly, the transmission path configuration may include association information between identification information of a transmission path such as a bear ID, and the XR traffic type. For example, the association information may be association information between a bearer #1 and the I stream (or the I frame) or association information between a bearer #2 and the P stream (or the P frame). Similarly to variation 1 of the first embodiment, the gNB 200 can transmit the traffic type used for the transmission path to the UE 100.

In step S51, the gNB 200 transmits the configuration information to the UE 100. The gNB 200 may transmit an RRC message (e.g., RRC setup (RRCSetup) message) including the configuration information. Alternatively, the gNB 200 may transmit a MAC CE including the configuration information.

In step S52, the UE 100 applies the transmission path configuration configured by the gNB 200 by applying the received configuration information.

### Third Embodiment

XR transmission may include transmission of video data (or video stream) as described in the first embodiment, too. Hence, a large amount of data may be transmitted compared to other techniques. In this case, a large amount of radio resources may be required for wireless transmission of XR. On the other hand, when XR transmission is ended, the radio resources used for the XR transmission may be preferably released as quickly as possible.

The third embodiment will describe an example where, when transmission of the XR traffic is ended or when transmission of the XR traffic is temporarily interrupted, the UE 100 notifies the gNB 200 of the end or the temporary interruption of transmission. More specifically, the user equipment (e.g., UE 100) transmits to the base station (e.g., gNB 200) one of end information indicating to end transmission of the XR traffic or interruption information indicating to interrupt transmission of the XR traffic. Note that the third embodiment may be carried out after the XR assistance information described in the first embodiment is transmitted from the UE 100 to the gNB 200 and configuration relating to XR is performed. In this regard, the third embodiment may be carried out without the premise of the first embodiment.

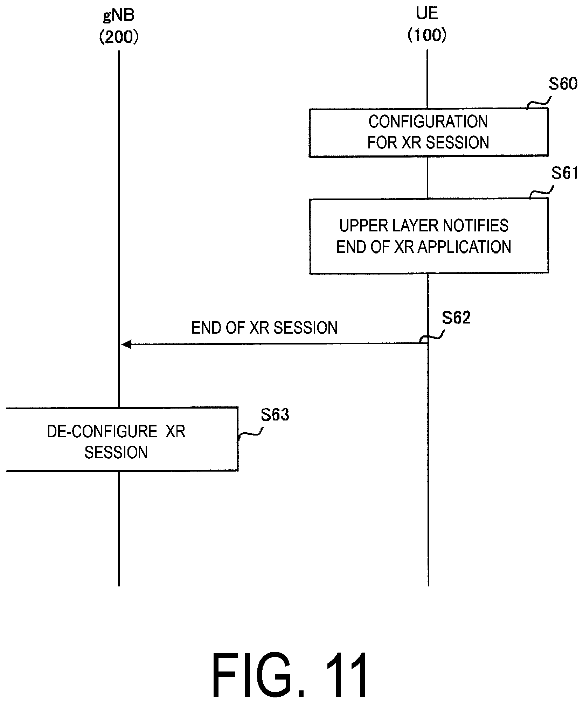

FIG. 11 is a diagram illustrating an operation example according to the third embodiment.

As illustrated in FIG. 11, in step S60, configuration for the XR session is performed for the UE 100. Examples of the configuration for the XR session include the DRX (or SPS) configuration for XR transmission in the DL direction, the CG (Configured Grant) configuration for XR transmission in the UL direction, and the like. As the configuration for the XR session, the transmission path configuration for the XR transmission described in the second embodiment may be performed.

In step S61, the AS of the UE 100 receives a notification of an end of the XR application from the upper layer (e.g., application layer). The AS of the UE 100 may receive the notification of the end of the XR session from the upper layer. Alternatively, the AS of the UE 100 may receive the notification of the end of XR transmission from the upper layer. Alternatively, the AS of the UE 100 may receive a notification of suspending XR transmission (or the XR session or the XR application) from the upper layer.

In step S62, the UE 100 transmits to the gNB 200 the end information indicating that the XR session has been ended. The UE 100 may transmit to the gNB 200 request information for requesting de-configuration of the XR session. Alternatively, the UE 100 may transmit to the gNB 200 suspension information indicating to suspend transmission of the XR traffic. The end information, the request information, or the suspension information may include identification information of a transmission path associated with the XR session. Similar to the first embodiment, the identification information may be one of the LCID, the bearer ID, the RLC channel ID, the RNTI, or the XR session ID. The UE 100 may transmit an RRC message including the end information, the request information, or the suspension information to the gNB 200. The UE 100 may transmit the MAC CE including the end information, the request information, or the suspension information to the gNB 200. The UE 100 may transmit DCI including the end information, the request information, or the suspension information to the gNB 200.

In step S63, the gNB 200 de-configures the XR session in response to reception of the end information. The gNB 200 may suspend the configuration for the XR session in response to reception of the suspension information.

Note that, before starting (or resuming) communication using XR, the UE 100 may transmit to the gNB 200 information indicating that communication using XR is started (or resumed). That is, when communication that uses XR is started (or resumed), the UE 100 may notify the gNB 200 of information indicating that the XR session has been started (or information indicating that the XR session has been resumed, or information indicating that the XR session is started and/or resumed in the near future). The notification may be a configuration request for the XR session. The notification may include information of a transmission path associated with the XR session. In a case where the notification indicates that the XR session is started and/or resumed in the near future, the notification may include information indicating a time at which the XR session is started and/or resumed (e.g., a start time or a time until the start). The notification may be included in an RRC message, a MAC CE, or the like and transmitted from the UE 100 to the gNB 200.

### Other Embodiments

A program causing a computer to execute each of the processing performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM.

Circuits for executing processing performed by the UE 100 or the gNB 200 may be integrated, and at least a part of the UE 100 or the gNB 200 may be implemented as a semiconductor integrated circuit (chipset, system on a chip (SoC)).

Embodiments have been described above in detail with reference to the drawings, but specific configurations are not limited to those described above, and various design variation can be made without departing from the scope of the present invention, as defined by the appended claims. All or some of the embodiments, operations, processes, and steps may be combined without being inconsistent.

The phrases "based on" and "depending on" used in the present disclosure do not mean "based only on" and "only depending on," unless specifically stated otherwise. The phrase "based on" means both "based only on" and "based at least in part on". The phrase "depending on" means both "only depending on" and "at least partially depending on". The terms "include", "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

The present application claims priority to Japanese Patent Application No. 2022-070308 (filed on April 21, 2022).

### REFERENCE SIGNS

1: Mobile communication system
20: CN
100: UE
110: Receiver
120: Transmitter
130: Controller
200: gNB
210: Transmitter
220: Receiver
230: Controller
300: AMF

## Claims

1. A communication control method in a mobile communication system (1), the communication control method comprising:
receiving, at a user equipment (100) from a network node (200), configuration information comprising a Quality of Service, QoS, flow ID for eXtended Reality, XR, traffic and a session ID for the XR traffic associated with the QoS flow ID; and
transmitting, at the user equipment (100) to the network node (200), XR assistance information relating to the XR traffic on a basis on the configuration information, the XR assistance information comprising the QoS flow ID.

2. The communication control method according to claim 1, wherein
the XR assistance information comprises a transmission period and/or a reception period of the XR traffic.

3. The communication control method according to claim 1, wherein
the XR assistance information comprises a delay tolerance of the XR traffic.

4. The communication control method according to claim 1, further comprising
transmitting, at the user equipment (100) to the network node (200), a logical channel ID relating to the XR traffic.

5. The communication control method according to claim 1, further comprising
transmitting, at the user equipment (100) to the network node (200), a difference between a Configured Grant, CG, configuration and a timing at which a packet is received from an upper layer.

6. The communication control method according to claim 5, further comprising
including, at the user equipment (100), the difference in a MAC CE.

7. The communication control method according to claim 1, further comprising
transmitting, at the user equipment (100) to the network node (200), one of end information indicating to end transmission of the XR traffic or suspension information indicating to suspend the transmission of the XR traffic.

8. The communication control method according to claim 1, further comprising
transmitting, at an access mobility management apparatus, a packet delay budget of the XR traffic to the network node (200).

9. A user equipment (100) comprising transceiver circuitry and processing circuitry operatively associated with the transceiver circuitry and configured to execute processes of:
receiving, from a network node (200), configuration information comprising a Quality of Service, QoS, flow ID for eXtended Reality, XR, traffic and a session ID for the XR traffic associated with the QoS flow ID; and
transmitting, to the network node (200), XR assistance information relating to the XR traffic on a basis on the configuration information, the XR assistance information comprising the QoS flow ID.

10. A network node (200) comprising transceiver circuitry and processing circuitry operatively associated with the transceiver circuitry and configured to execute processes of:
transmitting, to a user equipment (100), configuration information comprising a Quality of Service, QoS, flow ID for eXtended Reality, XR, traffic and a session ID for the XR traffic associated with the QoS flow ID; and
receiving, from the user equipment (100), XR assistance information relating to the XR traffic on a basis on the configuration information, the XR assistance information comprising the QoS flow.

11. A mobile communication system (1) comprising the user equipment (100) according to claim 9 and the network node (200) according to claim 10.

12. A computer program comprising instructions that, when the program is executed by a user equipment (100), cause the user equipment (100) to carry out the method according to claim 1.

13. A chipset for a user equipment (100), the chipset comprising means for carrying out the method of claim 1.

## Patentansprüche

1. Kommunikationssteuerverfahren in einem Mobilkommunikationssystem (1), wobei das Kommunikationssteuerverfahren aufweist:
Empfangen, an einer Benutzereinrichtung (100) von einem Netzwerkknoten (200), von Konfigurationsinformationen aufweisend eine Quality-of-Service-, QoS-, -Fluss-ID für Extended-Reality-, XR-, -Verkehr und eine Sitzungs-ID für den mit der QoS-Fluss-ID assoziierten XR-Verkehr, und
Senden, an der Benutzereinrichtung (100) an den Netzwerkknoten (200), von XR-Unterstützungsinformationen, die sich auf den XR-Verkehr beziehen, auf einer Basis der Konfigurationsinformationen, wobei die XR-Unterstützungsinformationen die QoS-Fluss-ID aufweisen.

2. Kommunikationssteuerverfahren gemäß Anspruch 1, wobei
die XR-Unterstützungsinformationen eine Sendeperiode und/oder eine Empfangsperiode des XR-Verkehrs aufweisen.

3. Kommunikationssteuerverfahren gemäß Anspruch 1, wobei
die XR-Unterstützungsinformationen eine Verzögerungstoleranz des XR-Datenverkehrs aufweisen.

4. Kommunikationssteuerverfahren gemäß Anspruch 1, ferner aufweisend
Senden, an der Benutzereinrichtung (100) an den Netzwerkknoten (200), einer Logikkanal-ID in Bezug auf den XR-Datenverkehr.

5. Kommunikationssteuerverfahren gemäß Anspruch 1, ferner aufweisend:
Senden, an der Benutzereinrichtung (100) an den Netzwerkknoten (200), einer Differenz zwischen einer Configured-Grant-, CG-, -Konfiguration (CG) und einem Zeitpunkt, zu dem ein Paket von einer höheren Schicht empfangen wird.

6. Kommunikationssteuerverfahren gemäß Anspruch 5, ferner aufweisend:
Aufnehmen, an der Benutzereinrichtung (100), der Differenz in ein MAC-CE.

7. Kommunikationsverfahren gemäß Anspruch 1, ferner aufweisend:
Senden, an der Benutzereinrichtung (100) an den Netzwerkknoten (200), von einer von Beendigungsinformationen, die ein Beenden des Sendens des XR-Verkehrs angeben, oder Unterbrechungsinformationen, die ein Unterbrechen des Sendens des XR-Verkehrs angeben.

8. Kommunikationssteuerverfahren gemäß Anspruch 1, ferner aufweisend:
Senden, an einer Zugangsmobilitätsmanagementvorrichtung, eines Paketverzögerungsbudgets des XR-Verkehrs an den Netzwerkknoten (200).

9. Benutzereinrichtung (100), aufweisend eine Sende-Empfangs-Schaltung und eine Verarbeitungsschaltung, die funktionsmäßig mit der Sende-Empfangs-Schaltung verbunden ist und konfiguriert ist, um folgende Prozesse auszuführen:
Empfangen, von einem Netzwerkknoten (200), von Konfigurationsinformationen aufweisend eine Quality-of-Service-, QoS-, -Fluss-ID für Extended-Reality-, XR-, -Verkehr und eine Sitzungs-ID für den mit der QoS-Fluss-ID assoziierten XR-Verkehr, und
Senden, an den Netzwerkknoten (200), von XR-Unterstützungsinformationen in Bezug auf den XR-Verkehr, auf einer Basis der Konfigurationsinformationen, wobei die XR-Unterstützungsinformationen die QoS-Fluss-ID aufweisen.

10. Netzwerkknoten (200), aufweisend eine Sende-Empfangs-Schaltung und eine Verarbeitungsschaltung, die funktionsmäßig mit der Sende-Empfangs-Schaltung verbunden ist und konfiguriert ist, um folgende Prozesse auszuführen:
Senden, an eine Benutzereinrichtung (100), von Konfigurationsinformationen aufweisend eine Quality-of-Service-, QoS-, -Fluss-ID für Extended-Reality-, XR-, -Verkehr und eine Sitzungs-ID für den mit der QoS-Fluss-ID assoziierten XR-Verkehr, und
Empfangen, von der Benutzereinrichtung (100), von XR-Unterstützungsinformationen in Bezug auf den XR-Verkehr auf einer Basis der Konfigurationsinformationen, wobei die XR-Unterstützungsinformationen den QoS-Flow aufweisen.

11. Mobilkommunikationssystem (1), aufweisend die Benutzereinrichtung (100) gemäß Anspruch 9 und den Netzwerkknoten (200) gemäß Anspruch 10.

12. Computerprogramm, aufweisend Anweisungen, die, wenn das Programm von einer Benutzereinrichtung (100) ausgeführt wird, bewirken, dass die Benutzereinrichtung (100) das Verfahren gemäß Anspruch 1 durchführt.

13. Chipsatz für eine Benutzereinrichtung (100), wobei der Chipsatz Mittel zum Durchführen des Verfahrens gemäß Anspruch 1 aufweist.

## Revendications

1. Procédé de contrôle de communication dans un système de communication mobile (1), le procédé de contrôle de communication comprenant :
la réception, au niveau d'un équipement utilisateur (100), en provenance d'un nœud de réseau (200), d'informations de configuration comprenant un identifiant de flux de qualité de service, QoS, pour le trafic de réalité étendue, XR, et un identifiant de session pour le trafic XR associé à l'identifiant de flux QoS ; et
la transmission, au niveau de l'équipement utilisateur (100) vers le nœud de réseau (200), d'informations d'assistance XR relatives au trafic XR sur une base des informations de configuration, les informations d'assistance XR comprenant l'identifiant de flux QoS.

2. Procédé de contrôle de communication selon la revendication 1, dans lequel
les informations d'assistance XR comprennent une période de transmission et/ou une période de réception du trafic XR.

3. Procédé de contrôle de communication selon la revendication 1, dans lequel
les informations d'assistance XR comprennent une tolérance de retard du trafic XR.

4. Procédé de contrôle de communication selon la revendication 1, comprenant en outre
la transmission, au niveau de l'équipement utilisateur (100) vers le nœud de réseau (200), d'un identifiant de canal logique relatif au trafic XR.

5. Procédé de contrôle de communication selon la revendication 1, comprenant en outre
la transmission, au niveau de l'équipement utilisateur (100) vers le nœud de réseau (200), d'une différence entre une configuration de Configured Grant, CG, et un instant auquel un paquet est reçu depuis une couche supérieure.

6. Procédé de contrôle de communication selon la revendication 5, comprenant en outre
l'intégration, au niveau de l'équipement utilisateur (100), de ladite différence dans un MAC CE.

7. Procédé de contrôle de communication selon la revendication 1, comprenant en outre :
la transmission, au niveau de l'équipement utilisateur (100) vers le nœud de réseau (200), de l'une parmi une information de fin indiquant la fin de la transmission du trafic XR, ou une information de suspension indiquant la suspension de la transmission du trafic XR.

8. Procédé de contrôle de communication selon la revendication 1, comprenant en outre
la transmission, au niveau d'un dispositif de gestion de mobilité d'accès, d'un budget de retard de paquets du trafic XR vers le nœud de réseau (200).

9. Équipement utilisateur (100) comprenant un circuit émetteur-récepteur et un circuit de traitement associé de manière opérationnelle au circuit émetteur-récepteur et configuré pour exécuter les processus suivants :
la réception, en provenance d'un nœud de réseau (200), d'informations de configuration comprenant un identifiant de flux de qualité de service, QoS, pour le trafic de réalité étendue, XR, et un identifiant de session pour le trafic XR associé à l'identifiant de flux QoS ; et
la transmission, vers le nœud de réseau (200), d'informations d'assistance XR relatives au trafic XR sur une base des informations de configuration, les informations d'assistance XR comprenant l'identifiant de flux QoS.

10. Nœud de réseau (200) comprenant un circuit émetteur-récepteur et un circuit de traitement associé de manière opérationnelle au circuit émetteur-récepteur et configuré pour exécuter les processus suivants :
la transmission, vers un équipement utilisateur (100), d'informations de configuration comprenant un identifiant de flux de qualité de service, QoS, pour le trafic de réalité étendue, XR, et un identifiant de session pour le trafic XR associé à l'identifiant de flux QoS ;
la réception, en provenance de l'équipement utilisateur (100), d'informations d'assistance XR relatives au trafic XR sur une base des informations de configuration, lesdites informations d'assistance XR comprenant le flux QoS.

11. Système de communication mobile (1) comprenant l'équipement utilisateur (100) selon la revendication 9 et le nœud de réseau (200) selon la revendication 10.

12. Programme informatique comprenant des instructions qui, lorsque le programme est exécuté par un équipement utilisateur (100), amènent l'équipement utilisateur (100) à mettre en œuvre le procédé selon la revendication 1.

13. Jeu de puces pour un équipement utilisateur (100), le jeu de puces comprenant des moyens pour mettre en œuvre le procédé selon la revendication 1.
